Europäisches Patentamt

European Patent Office

Office européen des brevets

(11) Publication number: **0 014 186**
A1

(19)

## (12) EUROPEAN PATENT APPLICATION

(21) Application number: **80850009.4**

(22) Date of filing: **23.01.80**

(51) Int. Cl.³: **B 29 D 23/12, F 21 V 21/10**

(30) Priority: **24.01.79 NO 790234**

(43) Date of publication of application: **06.08.80**
Bulletin 80/16

(84) Designated Contracting States: **AT BE CH DE FR GB IT
NL SE**

(71) Applicant: **Omre, Torlelf, Rore Hageby, N-4890 Gromstad
(NO)**

(72) Inventor: **Omre, Torlelf, Rore Hageby, N-4890 Gromstad
(NO)**

(74) Representative: **Hammar, Stig et al, L.A. Groth & Co. AB
Västmannagatan 43, S-113 25 Stockholm (SE)**

(54) **Method of manufacturing tubes for lighting poles and the like.**

(57) To make plastic tubes for lighting poles and the like, a
core which is subdivided into a plurality of elements is
utilized. The outer circumference of the combined elements
corresponds to the desired tube circumference. A web of
polyester/glass fiber is first wound around each element,
after which the elements are fitted together and additional
layers of the web are wound around the outer circumfe-
rence of the composite unit. Extra reinforcing members may
optionally be introduced. After curing, the core elements are
removed.

EP 0 014 186 A1

DESCRIPTION

METHOD OF MANUFACTURING TUBES FOR LIGHTING POLES AND THE LIKE

The invention relates to a method of manufacturing tubes for lighting poles and the like. Today, such poles are usually made of wood or steel, but plastic poles with solid cores are also known. Such poles, however, are relatively heavy, such that the transportation and handling of them is relatively complicated and labor-consuming.

Without internal reinforcement, poles made of plastic material will not be sufficiently rigid. Since the tubes for lighting poles are manufactured in long lengths, it is also difficult to place the reinforcing members such that they are firmly anchored in the pole body itself, which is the reason that such poles most often have a solid core.

The object of the present invention is to overcome the above disadvantages and to provide tubes for poles by a method which makes it possible to produce a stable and secure reinforcement in the pole body, said reinforcement being at the same time light in weight such that the entire pole is lightweight and will thus be easy to transport. Such a lightweight pole can also then easily be situated in the terrain, for example, for artificially lightened ski trails and the like.

The object of the invention is obtained by means of a method whose characterizing features are recited in the appurtenant patent claims.

With the method of the invention, one has succeeded in integrating a lightweight and rigid reinforcement in the pole body itself, such that the poles will be able to withstand the stresses to which they will be subjected during use.

The invention will be elucidated further in the following with the aid of the embodiments illustrated in the drawings, which show three different cross sections of light pole tubes constructed in accordance with the invention.

The embodiments illustrated in the drawings show poles of circular cross section, but it will be obvious that the invention also comprises poles having other configurations; multi- sided figures such as squares, triangular shapes, etc., oval forms, or any other desired configuration may be utilized. The essential feature of the invention is that the desired pole configuration, of whatever shape, be a composite unit of several, preferably identical parts. For the sake of simplicity, however, a circular cross section has been selected as the exemplary embodiment.

The method is carried out in the following manner:

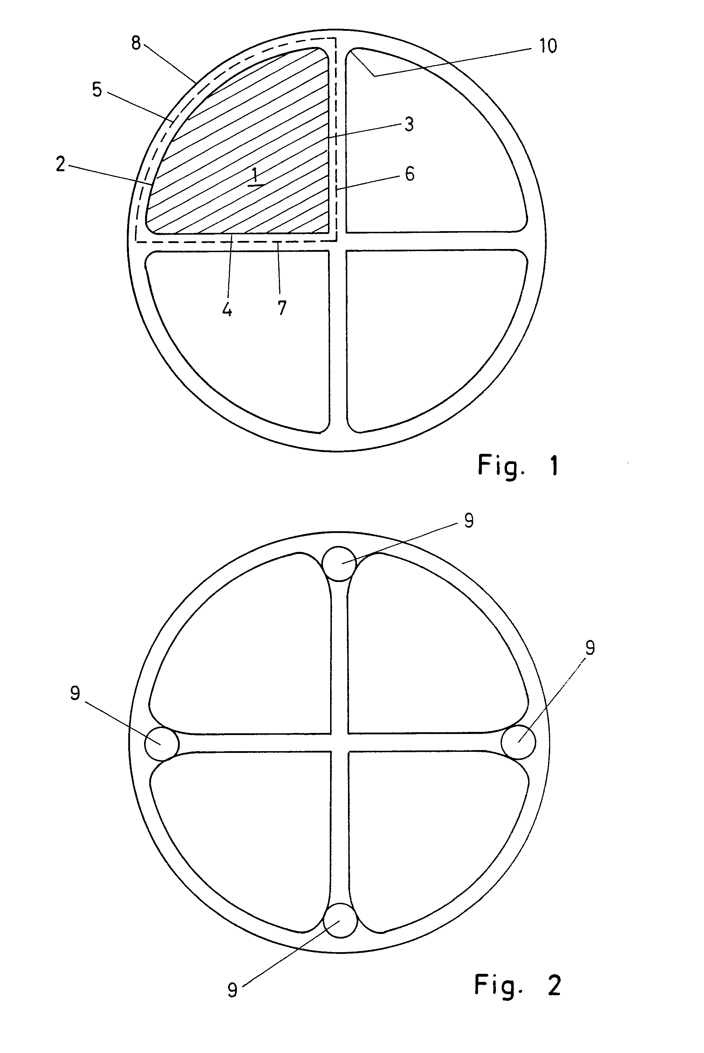

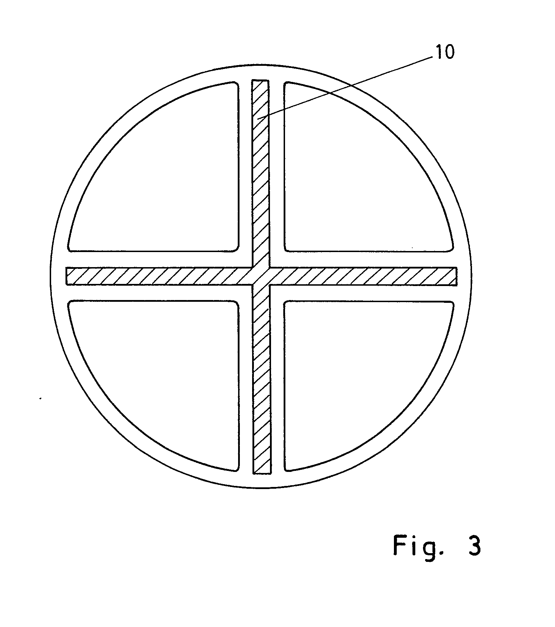

In the manufacture of the tube, a mandrel or a core element which has a cross section corresponding to a portion of the cross section of the desired finished tube is utilized. Preferably, the core portion is formed such that several identical core parts together will form the desired tube shape. One such core portion is shown by the shaded area in Figure 1, identified by reference numeral 1. Four such core portions together form a circular shape. A web of glass fiber and polyester is wound around the elongated core portion 1, wrapped such that the web is in contact with the side surfaces 2, 3, 4. The web is wound along the entire length of the tube, to a thickness corresponding to the dashed lines 5, 6, 7. Four such core portions are then fitted together with their straight sides adjacent to form the desired tube configuration, whereby the abutting side surfaces will become intimately connected and integrated. Around the composite form, along the lines formed by the outer peripheral surface 5, an additional web of glass fiber/polyester is then wound to a thickness 8 which corresponds to the dimensions of the desired tube. The polyester is then allowed to cure and the cores are subsequently removed, and one has thus obtained a tube having a rigid inner cross-reinforcement. Made in this way, the reinforcement in the interior of the tube will be of the same thickness as the thickness of the tube wall itsel. However, there is nothing to prevent one from having an outer thickness which is different from the thickness of the reinforcement.

The configuration shown in Figure 2 is substantially the same as that illustrated in Figure 1, but when the separate core elements are put together, steel reinforcing rods 9 are placed therebetween at the locations shown on the drawing, running in the longitudinal direction of the tube. These reinforcing rods 9 will provide an extra stiffening of the tube, and the rods will be permanently embedded in the polyester mass.

Figure 5 shows an alternate way of providing additional reinforcement. Here, one utilizes for example a cross of wood material, and the four core elements are set into the angles of the cross with their straight sides adjacent to the arms of the cross, such that they will adhere to the cross. Upon completion of the final winding for the outer form of the tube. The core elements will become bonded together around this inner reinforcement, which will thus be permanently embedded in the polyester mass.

Many modifications are possible within the scope of the invention. One can obtain special effects with an appropriate shaping of the core parts 1, and one might also introduce reinforcing members into the corner sections which are designated 10 in Figure 1. Such strengthened sections may for example be formed by filling extra polyester into the grooves that are formed when the core elements are put together, at the points designated 10, prior to the final winding.

4

## CLAIMS

1. A method of manufacturing tubes for lighting poles and the like, utilizing a core which is divided into a plurality of elements whose outer circumferences together form the final circumference of the tube, characterized in that a web of uncured polyester/glass fiber is first wound around each core element, that the elements are subsequently fitted together to form a desired tube cross section, after which an additional layer of web is wound around the composite elements, the entire unit then being cured and the core removed.

2. A method according to claim 1, characterized in that core portions which are rounded at the corners are used, and that in the grooves thus provided between said rounded corners, extra polyester is added to form a reinforcement before the final winding is undertaken.

3. A method according to claims 1 or 2, characterized in that the final winding is made to a thickness corresponding to the thickness of the first winding.

4. A method according to claim 2, characterized in that prior to the fitting together of the core elements, and additional reinforcing member in the longitudinal direction of the tube is placed between adjacent regions of the core elements.

5. A method according to claim 1, characterized in that an additional reinforcing member is placed between the core parts prior to fitting them together.

Fig. 1

Fig. 2

Fig. 3

## DOCUMENTS CONSIDERED TO BE RELEVANT

| Category | Citation of document with indication, where appropriate, of relevant passages | Relevant to claim |
|---|---|---|
| X | US - A - 1 389 143 (W.H. KEMPTON) <br> * Page 2, lines 1,29-53, 90-91; figures 3,4 * | 1,2 |
| | FR - A - 1 140 510 (GAR WOOD IND.) <br> * Pages 2 and 3; figures 2,8 * | 1 |
| | DE - B - 1 275 279 (BOLKOW) <br> * Figure 2 * | 1 |
| A | DE - B - 1 148 737 (INGOCHEM. LIM | |
| A | DE - B - 1 246 993 (CARL FREUDEN-BERG) | |
| A | DE - A - 2 134 471 (G.A. PFLEIDERER) | |
| A | US - A - 3 813 837 (S.A. McCLAIN) | |

**CLASSIFICATION OF THE APPLICATION (Int. Cl. )**

B 29 D 23/12
F 21 V 21/10

**TECHNICAL FIELDS SEARCHED (Int.Cl. )**

B 29 D 23/12
3/02
F 21 V 21/10
E 04 H 12/00
12/02

**CATEGORY OF CITED DOCUMENTS**

X. particularly relevant
A. technological background
O: non-written disclosure
P: intermediate document
T: theory or principle underlying the invention
E: conflicting application
D: document cited in the application
L: citation for other reasons

&· member of the same patent family, corresponding document

The present search report has been drawn up for all claims

| Place of search | Date of completion of the search | Examiner |
|---|---|---|
| The Hague | 06-05-1980 | VAN BELLEGHEM |

EPO Form 1503.1  06.78